# EUROPEAN PATENT APPLICATION

(11) **EP 4 844 723 A1**
(43) Date of publication of application: **25.11.2026**
(21) Application number: 26180058.5
(22) Date of filing: 20.05.2026
(51) Int. Cl.: G08B 25/00, G06F 21/10, G06F 21/60

(54) **ARTIFICIAL INTELLIGENCE MARKETPLACE FOR SECURITY MANAGEMENT SYSTEM**

(30) Priority: 21.05.2025 US 202563809720 P; 18.05.2026 US 202619680686
(71) Applicant: Tyco Fire & Security GmbH, 8212 Neuhausen am Rheinfall (CH)
(72) Inventor: MONAHAN, David, Donaghadee, BT21 0FZ (GB); PITTMAN, Gerard P., Washington, 98045 (US)
(74) Representative: Hunter, Christopher Jack Owen

(57) **Abstract**

A system and method for adding user selectable artificial intelligence (AI) functionality to a security management system presents on a user interface of the security management system an option for a user to enter an AI marketplace. The AI marketplace presents a list of user selectable AI models that may be suitable for adding AI functionality to the security management system. A setup wizard may be launched for each AI model that is selected by a user. The setup wizard is configured to present user selectable setup options for each respective AI model, receive a user identification of selected options, and adapt each respective AI model to the security management system based on the selected options. The wizard may also include configuration of notifications, dashboards and/or reports.

## Description

### CROSS-REFERENCE TO RELATED APPLICATIONS

The present application claims priority to U.S. Provisional Patent Application Serial No. 63/809,720, entitled "ARTIFICIAL INTELLIGENCE MARKETPLACE FOR SECURITY MANAGEMENT SYSTEM" filed on 21 May 2025, and U.S. Patent Application No. 19/680,686, entitled "ARTIFICIAL INTELLIGENCE MARKETPLACE FOR SECURITY MANAGEMENT SYSTEM" filed on 18 May 2026, the entire disclosures of which are incorporated by reference herein.

### TECHNICAL FIELD

Aspects of the present disclosure relate generally to security management systems, and, more particularly, to a system and method to simplify selection and integration of artificial intelligence functionality to a security management system.

### BACKGROUND

Security management systems generally include numerous security components such as cameras and sensors in communication with a central computer system for data storage, management and control of the security components, and access to security data. As additional functionality, such as artificial intelligence (AI) functionality, is developed and becomes available, it may be desirable to improve the security management system by incorporating certain additional functionality. However, selecting, acquiring, installing and configuring appropriate functional modules to enable a desired functionality on a particular implementation of a security management system may be prohibitively time consuming and complicated. Thus, improvements in security management systems are desired.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

An example aspect includes a method for adding user selectable artificial intelligence (AI) functionality to a security management system, comprising presenting on a user interface of the security management system an option for a user to enter an AI marketplace of the security management system. The method further includes receiving a user selection of the option. Additionally, the method further includes presenting a list of user selectable AI models, in response to the user selection of the option, on the user interface of the AI marketplace. Additionally, the method further includes receiving a user selection of one or more AI models of the list of user selectable AI models. Additionally, the method further includes launching a setup wizard for each of the one or more AI models in response to receiving the user selection of the one or more AI models, wherein the setup wizard is configured to present user selectable setup options for each respective AI model, receive a user identification of selected options, and adapt each respective AI model to the security management system based on the selected options.

Another example aspect includes an apparatus for adding user selectable artificial intelligence (AI) functionality to a security management system, comprising one or more memories and one or more processors coupled with one or more memories and configured to perform, individually or in any combination, the following actions. The one or more processors are configured to present on a user interface of the security management system an option for a user to enter an AI marketplace of the security management system. The one or more processors are further configured to receive a user selection of the option. Additionally, the one or more processors are further configured to present a list of user selectable AI models, in response to the user selection of the option, on the user interface of the AI marketplace. Additionally, the one or more processors are further configured to receive a user selection of one or more AI models of the list of user selectable AI models. Additionally, the one or more processors are further configured to launch a setup wizard for each of the one or more AI models in response to receiving the user selection of the one or more AI models, wherein the setup wizard is configured to present user selectable setup options for each respective AI model, receive a user identification of selected options, and adapt each respective AI model to the security management system based on the selected options.

Another example aspect includes an apparatus for adding user selectable artificial intelligence (AI) functionality to a security management system, comprising means for presenting on a user interface of the security management system an option for a user to enter an AI marketplace of the security management system. The apparatus further includes means for receiving a user selection of the option. Additionally, the apparatus further includes means for presenting a list of user selectable AI models, in response to the user selection of the option, on the user interface of the AI marketplace. Additionally, the apparatus further includes means for receiving a user selection of one or more AI models of the list of user selectable AI models. Additionally, the apparatus further includes means for launching a setup wizard for each of the one or more AI models in response to receiving the user selection of the one or more AI models, wherein the setup wizard is configured to present user selectable setup options for each respective AI model, receive a user identification of selected options, and adapt each respective AI model to the security management system based on the selected options.

Another example aspect includes a computer-readable medium having instructions stored thereon for adding user selectable artificial intelligence (AI) functionality to a security management system, wherein the instructions are executable by one or more processors, individually or in any combination, to perform the following actions. The instructions are executable to present on a user interface of the security management system an option for a user to enter an AI marketplace of the security management system. The instructions are further executable to receive a user selection of the option. Additionally, the instructions are further executable to present a list of user selectable AI models, in response to the user selection of the option, on the user interface of the AI marketplace. Additionally, the instructions are further executable to receive a user selection of one or more AI models of the list of user selectable AI models. Additionally, the instructions are further executable to launch a setup wizard for each of the one or more AI models in response to receiving the user selection of the one or more AI models, wherein the setup wizard is configured to present user selectable setup options for each respective AI model, receive a user identification of selected options, and adapt each respective AI model to the security management system based on the selected options.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, wherein dashed lines may indicate optional elements, and in which:
Fig. 1 is system diagram of a security management system including an AI marketplace component according to an aspect of the present disclosure;
Fig. 2 is system architecture block diagram of a security management system including an AI processing layer according to an aspect of the present disclosure;
Fig. 3 is an illustration of an example of a market place homepage according to an aspect of the present disclosure;
Fig. 4 is an illustration of an example of an active filter page according to an aspect of the present disclosure;
Fig. 5 is an illustration of an example of a personal protection equipment (PPE) compliance app detail page according to an aspect of the present disclosure;
Fig. 6 is an illustration of an example of first step install wizard page according to an aspect of the present disclosure;
Fig. 7 is an illustration of an example of a second step install wizard page according to an aspect of the present disclosure;
Fig. 8 is an illustration of an example of a live camera feed with AI-generated bounding boxes and classification tags according to an aspect of the present disclosure;
Fig. 9 is an illustration of an example of an alert console page according to an aspect of the present disclosure;
Fig. 10 is an illustration of an example of a PPE compliance dashboard according to an aspect of the present disclosure;
Fig. 11 is a block diagram of an example of a computer device having components configured to perform a method for adding user selectable artificial intelligence (AI) functionality to a security management system according to an aspect of the present disclosure;
Fig. 12 is a flowchart of an example of a method for adding user selectable artificial intelligence (AI) functionality to a security management system according to an aspect of the present disclosure;
Fig. 13 is a flowchart of additional aspects of the method of Fig. 12 according to an aspect of the present disclosure;
Fig. 14 is a flowchart of additional aspects of the method of Fig. 12 according to an aspect of the present disclosure;
Fig. 15 is a flowchart of additional aspects of the method of Fig. 12 according to an aspect of the present disclosure;
Fig. 16 is a flowchart of additional aspects of the method of Fig. 12 according to an aspect of the present disclosure; and
Fig. 17 is a flowchart of additional aspects of the method of Fig. 12 according to an aspect of the present disclosure.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

The present disclosure relates to an AI marketplace for AI-based applications for security management systems, such as but not limited to the One Security Platform (OSP) of Johnson Controls. Before the introduction of the apparatus and method described herein, organizations faced substantial obstacles in deploying and managing AI-driven security analytics. The security management system unifies various physical security systems-such as access control, video surveillance, and intrusion detection-into a single management platform, but the process of adding AI capabilities was highly fragmented and required significant technical expertise. Users often had to manually configure AI models on individual devices, such as cameras or network video recorders, and coordinate settings across multiple software layers. This manual, device-by-device approach was not only time-consuming and error-prone but also made it difficult to scale AI solutions across large or complex security environments. As a result, many organizations underutilized available AI technologies, and the lack of a centralized mechanism for discovering, installing, or managing AI applications meant that deploying new analytics often required costly professional services and custom integrations.

The disclosed AI marketplace system and method fundamentally changes this landscape by providing a centralized, app-store-like experience within the security management system. Users can now browse a curated catalog of AI-driven security solutions, filter by industry or use case, and access detailed descriptions, hardware compatibility information, and deployment requirements for each app. For example, a security manager in a warehouse can quickly find and install a "PPE Compliance" app that automatically identifies cameras covering relevant zones and generates alerts when employees lack required protective equipment. This centralized discovery and deployment process eliminates the need for specialized AI knowledge and reduces the time and effort required to operationalize new analytics.

In an aspect, one technical advantage of the AI marketplace is its automated device discovery and compatibility mapping. The system maintains a device capability database for each customer that tracks the features and resources of each edge device-such as cameras, NVRs, and access controllers-within the organization's security infrastructure. When a user selects an AI app, the marketplace automatically identifies and recommends compatible devices, ensuring that only suitable hardware is configured for the selected analytics. This reduces manual configuration errors and streamlines deployment, especially in environments with diverse or legacy equipment.

The marketplace also introduces a wizard-driven, context-aware configuration process that adapts to the selected AI model and deployment scenario. For instance, when setting up a camera tamper detection app, the configuration wizard guides the user through capturing a "golden image" baseline for each camera, which the AI model then uses to detect changes in field of view, focus, or obstructions. In the case of tailgating detection, the wizard helps associate specific cameras with access control points, enabling the system to correlate badge swipes with video analytics and identify unauthorized entry events. This guided, step-by-step approach not only simplifies setup for non-technical users but also ensures that all necessary parameters are correctly configured, reducing the risk of incomplete or ineffective deployments.

In other aspects, another technical improvement is the unified lifecycle management and real-time integration of AI applications. Once deployed, AI apps are monitored and managed through a consolidated interface, with real-time events and analytics integrated into security management system's alerting and dashboard systems. For example, alerts generated by an intrusion detection app appear alongside other security notifications, and users can access historical reports and compliance trends through unified dashboards. This integration provides actionable insights across multiple use cases and enables organizations to respond more quickly and effectively to security incidents.

The AI marketplace is designed to be extensible and secure, supporting both first-party and third-party AI solutions. Role-based access control ensures that only authorized users can install or manage apps, and the system performs automated resource checks to verify that sufficient compute resources (such as CPU or GPU capacity) are available for each deployment. If additional resources are needed, the marketplace can recommend cloud-based processing or hardware upgrades, ensuring optimal performance without manual intervention.

By offering a self-service, frictionless deployment experience, the AI marketplace democratizes access to advanced security analytics. Non-technical users benefit from plain-language descriptions, preview modes for AI detections, and minimal-configuration deployment, while organizations gain the ability to scale AI solutions rapidly and efficiently. These features collectively represent a significant technical advancement over prior approaches, enabling scalable, user-friendly, and integrated deployment of AI security solutions within a unified platform. For example, the ability to automatically map AI models to compatible devices and guide users through context-aware configuration steps reduces the need for specialized expertise and accelerates time-to-value, while unified monitoring and reporting enhance situational awareness and compliance management across the entire security ecosystem.

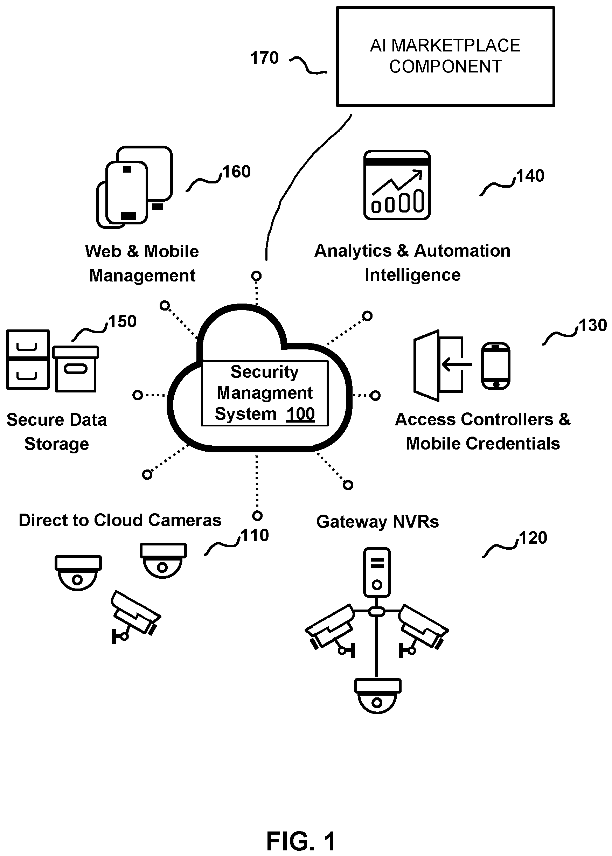

Referring to Fig. 1, the present disclosure provides an integrated security management system that enables user-selectable artificial intelligence (AI) functionality to be seamlessly incorporated into a unified security platform through a centralized AI marketplace component 170. For example, the system allows a user to access an AI marketplace via a user interface, select from a plurality of available AI models, and deploy and configure those models across a range of security devices and infrastructure. This approach streamlines the discovery, installation, and configuration of AI-driven security analytics, reducing the need for specialized technical expertise and minimizing manual configuration errors.

Within this system, the security management system 100 serves as the central management and orchestration layer, aggregating data from a diverse set of connected devices and providing unified control over security subsystems such as access control, video surveillance, and intrusion detection. The security management system 100 is responsible for managing user access, device configuration, and analytics, and acts as the primary interface for both administrative and operational workflows. Suitable examples of the security management system 100 include cloud-based or hybrid security management platforms capable of supporting both on-premises and remote deployments, offering flexibility and scalability for organizations of varying sizes.

Direct to cloud cameras 110 are networked video capture devices that transmit video feeds or uploads media files directly to the cloud infrastructure managed by the security management system 100. These cameras may support real-time streaming, uploading media files, edge analytics, and secure data transmission. For example, IP cameras with built-in cloud connectivity, such as those supporting Open Network Video Interface Forum (ONVIF) or other public or proprietary secure streaming protocols, are suitable for this role. The direct to cloud cameras 110 enable a reduction of on-premises hardware requirements and the ability to leverage cloud-based AI processing for advanced analytics. Although, it should be understood that cameras with local storage may also be used herein.

Gateways 120 act as secure communication bridges between on-premises devices and the cloud-based security management system 100. They facilitate the secure transfer of data, events, and video streams from local devices, such as cameras and access controllers, to the central management platform. Gateways 120 may also provide protocol translation, device discovery, and local buffering. Examples of gateways 120 include, but are not limited to, hardware or virtual appliances that support secure tunneling, encryption, and device management protocols. The use of gateways 120 enhances system scalability and security by isolating local networks from external threats.

Network video recorders (NVRs) 130 aggregate and store video feeds from multiple cameras, providing both local storage and, in some cases, edge analytics capabilities. NVRs 130 may also support event-based recording, video playback, and integration with AI models for real-time or batch processing. Examples of NVRs 130 include, but are not limited to, rack-mounted or standalone appliances with multi-terabyte storage and support for AI-enabled video analytics modules. The integration of NVRs 130 allows for efficient video management and redundancy, ensuring continuous operation even during network disruptions. In some implementations, one or more of the NVRs) 130 and gateways 120 may be combined into a single device.

Access controllers 140 manage physical access points, such as doors and gates, by authenticating users and enforcing access policies. These devices interface with access control devices, such as but not limited to, card readers, biometric scanners, and electronic locks, to control entry and exit. Access controllers 140 may also generate event data, such as badge swipes or door open/close events, which can be correlated with video analytics for enhanced security use cases. Examples of access controllers 140 include, but are not limited to, panel-based access control units, IP-enabled door controllers, and integrated security appliances. The access controllers 140 provide granular, real-time access management and event logging.

Mobile credentials 150 represent digital authentication tokens stored on user devices, such as smartphones or wearables, which can be used to gain access to secured areas. These credentials may be transmitted via NFC, Bluetooth, or QR codes and are managed by the security management system 100 for secure provisioning and revocation. Examples of mobile credentials 150 include, but are not limited to, mobile access apps, digital keycards, and secure credential wallets. The use of mobile credentials 150 increases convenience and security by reducing reliance on physical cards and enabling rapid credential updates.

Secure data access controllers and storage 160 provide secure management and storage of sensitive data, including video footage, access logs, and AI-generated metadata. These components ensure data integrity, confidentiality, and compliance with regulatory requirements. Examples of secure data access controllers and storage 160 include, but are not limited to, encrypted storage arrays, secure cloud storage services, and hardware security modules (HSMs). The secure data access controllers and storage 160 provide robust protection of sensitive information against unauthorized access or tampering.

The AI marketplace 170 is integrated within the security management system 100 and provides a user interface for browsing, selecting, and deploying AI models tailored to specific security use cases. The marketplace 170 interacts with configuration wizards, device capability databases, and resource management modules to ensure that only compatible devices are selected and that all necessary parameters are configured automatically or with minimal user input. For example, when a user selects a PPE compliance detection model, the AI marketplace 170 automatically identifies suitable cameras, suggests optimal configuration parameters, and guides the user through setup via a step-by-step wizard. This centralized approach offers reduces deployment complexity, minimizes configuration errors, and enables rapid scaling of AI solutions across diverse environments.

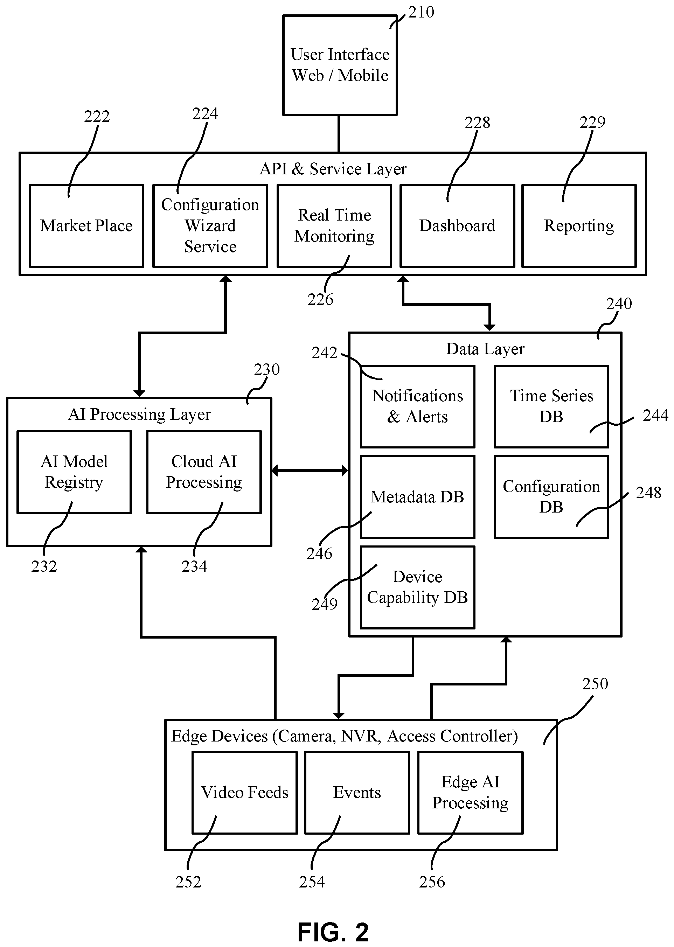

Referring to Fig. 2, the system architecture is further detailed to illustrate the flow of data and orchestration of services that enable the deployment and management of AI-driven security analytics. Fig. 2 presents a layered architecture that integrates user interaction, service orchestration, AI processing, data management, and edge device operations. The architecture is designed to facilitate seamless communication between system components, automate device discovery and configuration, and provide real-time monitoring and reporting capabilities.

At the top of the architecture, the user interface 210 provides access to all system features, including the AI marketplace, configuration wizards, real-time monitoring, dashboards, and reporting tools. The user interface 210 may be accessible via web browsers or mobile applications, supporting both administrative and operational workflows. Examples of user interface 120 include, but are not limited to, responsive web portals, dedicated mobile apps, and touchscreen control panels. The user interface 210 presents complex system functionality in an intuitive, user-friendly manner, reducing training requirements and increasing adoption.

Beneath the user interface, the application programming interface (API) & service layer 220 acts as the intermediary between the user interface 210 and the underlying system components. This layer includes the Market Place 222, which enables users to discover, evaluate, and install AI models; the Configuration Wizard Service 224, which guides users through the setup and deployment of AI models and system components; the Real Time Monitoring Service 226, which aggregates alerts, notifications, and analytics from connected devices and AI applications; the Dashboard 228, which provides visualization of system data and AI-generated insights; and the Reporting Service 229, which enables users to generate compliance reports and track key performance indicators. The API & service layer 220 manages communication, authentication, and orchestration of these services, supporting integration with third-party systems and extensibility for future enhancements. Examples of the API & service layer 220 include, but are not limited to, RESTful APIs, microservices architectures, and middleware platforms.

The AI processing layer 230 is responsible for executing AI models and managing the AI Model Registry 232, which stores available AI models and their associated metadata. The Cloud AI Processing Module 234 enables the execution of AI models in the cloud, leveraging scalable compute resources for advanced analytics. The AI processing layer 230 processes video feeds, event data, and other inputs to generate actionable insights and alerts. This layer may leverage GPU-accelerated hardware, cloud-based AI services, or edge computing resources. Examples of the AI processing layer 230 include, but are not limited to, cloud AI inference engines, edge AI modules embedded in cameras or NVRs, and hybrid processing frameworks.

The data layer 240 encompasses the storage and management of all system data, including the Notification Module 242, which generates and routes notifications and alerts in response to security events, device status changes, or AI model detections; the Time Series Database 244, which stores time-stamped event data for historical analysis and trend detection; the Metadata Database 246, which maintains searchable information such as license plate numbers, object classifications, and other AI-generated metadata; the Configuration Database 248, which stores system and device configuration parameters; and the Device Capability Database 249, which maintains an inventory of all connected devices and their supported features. The data layer 240 ensures data consistency, availability, and security across the platform. Examples of the data layer 240 include, but are not limited to, relational databases, time series databases, and distributed storage systems.

At the edge of the architecture, edge devices 250-including cameras, NVRs, and access controllers-serve as the primary data sources and enforcement points within the security environment. These devices capture video, manage access, and execute edge AI models as required. Video Feeds 252 and Events Module 254 represent the primary data streams ingested by the system for analysis and monitoring. Video feeds 252 provide real-time and recorded footage for AI processing, while events 254 include access control transactions, sensor triggers, and system status updates. The Edge AI Processing Module 256 enables the execution of AI models directly on edge devices, reducing latency and bandwidth requirements and allowing for real-time analytics and rapid incident detection at the source. Examples of edge devices 250 include, but are not limited to, AI-enabled cameras, embedded vision processors, and edge gateways with machine learning capabilities.

The interaction between these components enables a robust, scalable, and user-friendly platform for deploying and managing AI-driven security analytics. The integration of the AI marketplace 170 with the security management system 100 and associated components provides improvements over existing solutions by automating device discovery, configuration, and lifecycle management, thereby enabling organizations to rapidly adopt and scale advanced security solutions with minimal manual intervention. The layered architecture illustrated in Fig. 2 ensures that each system component can interact efficiently with others, supporting seamless data flow, real-time monitoring, and comprehensive reporting, all while maintaining high standards of security, scalability, and usability.

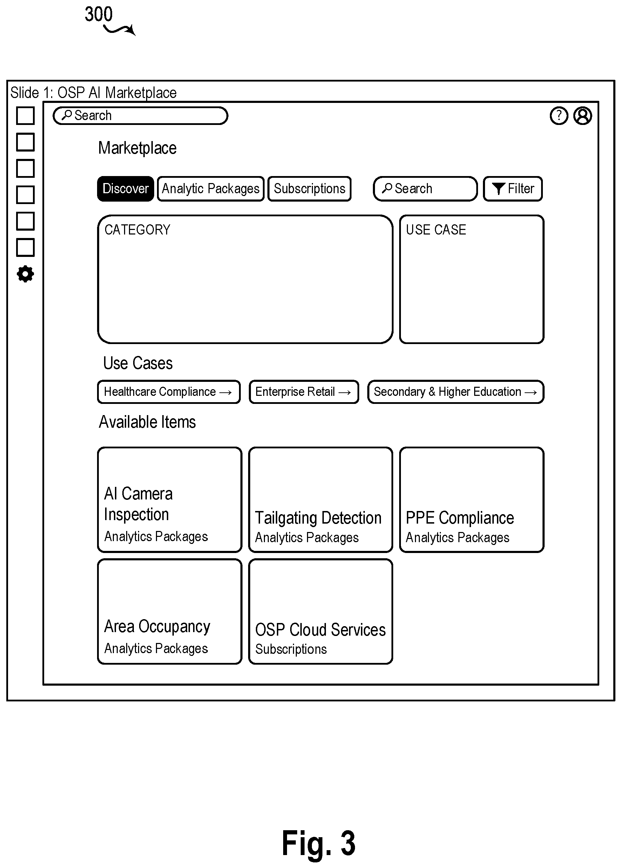

Referring to Figs. 3-9, an overview is provided of one potential implementation of the security management system AI Marketplace, which serves as a centralized, app-store-like experience for deploying AI security solutions tailored to the needs of various industry verticals. In an aspect, the AI Marketplace provides a unified entry point within the security management system for users to discover, evaluate, and install AI-driven applications that address specific security and analytics use cases. This centralized approach streamlines the process of enhancing security operations with advanced AI capabilities, reducing the need for specialized technical expertise and enabling rapid adoption across diverse environments.

The screenshot depicted in Fig. 3 shows an example of one implementation of the Marketplace homepage 300, which features a main catalog view organized by categories such as Healthcare, Retail, Government, and other industry verticals. The user interface is designed to be intuitive and visually engaging, with clearly labeled category tiles or tabs that allow users to quickly filter and browse available AI solutions relevant to their operational context. Prominent navigation elements, such as a search bar and filter options, are included to facilitate efficient discovery of AI applications. The layout emphasizes ease of use, enabling users to access detailed information about each AI solution with minimal effort. The Marketplace homepage 300 may be designed to facilitate the reduction of friction in the AI adoption process, empowering users to identify and deploy solutions that best fit their unique security requirements.

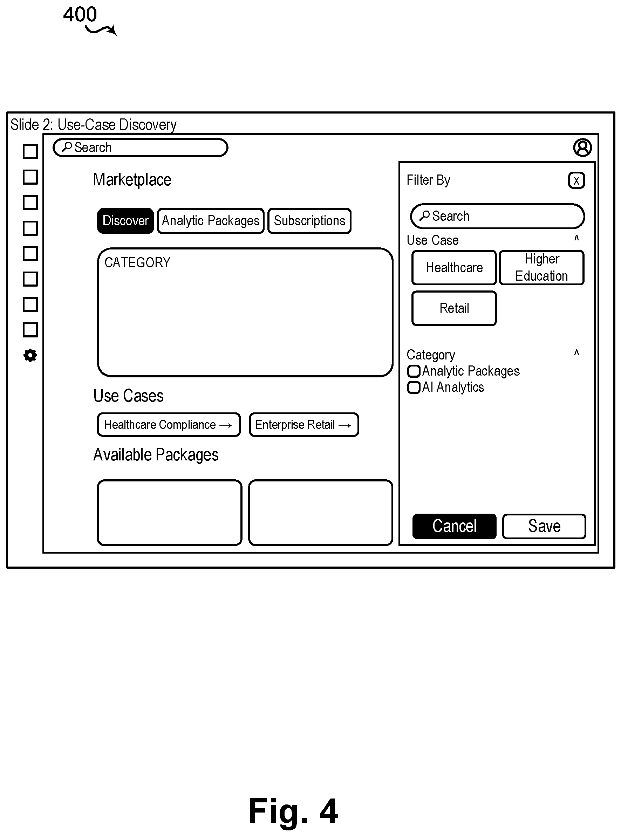

Referring to Fig. 4, details of one example of the use case discovery functionality within the security management system AI Marketplace are provided, which enables users to browse and filter AI solutions by industry or application. This feature supports targeted exploration of AI models, ensuring that users can efficiently identify solutions that address their specific operational challenges or compliance needs.

The screenshot in Fig. 4 includes an example of one implementation of an active filters panel 400, where users can select vertical tags such as Healthcare, Education, or Retail to narrow down the list of matching AI applications. The interface presents a dynamic list of AI apps that correspond to the selected filters, providing a streamlined workflow for discovering relevant solutions. Each AI app is represented by a card or list item that includes a brief description, key features, and an option to view more details. The design of the filters panel and results list is optimized for clarity and responsiveness, allowing users to quickly iterate through different filter combinations and immediately see the impact on the available solutions. This approach enhances user efficiency and ensures that decision-makers can focus on the most pertinent AI applications for their environment.

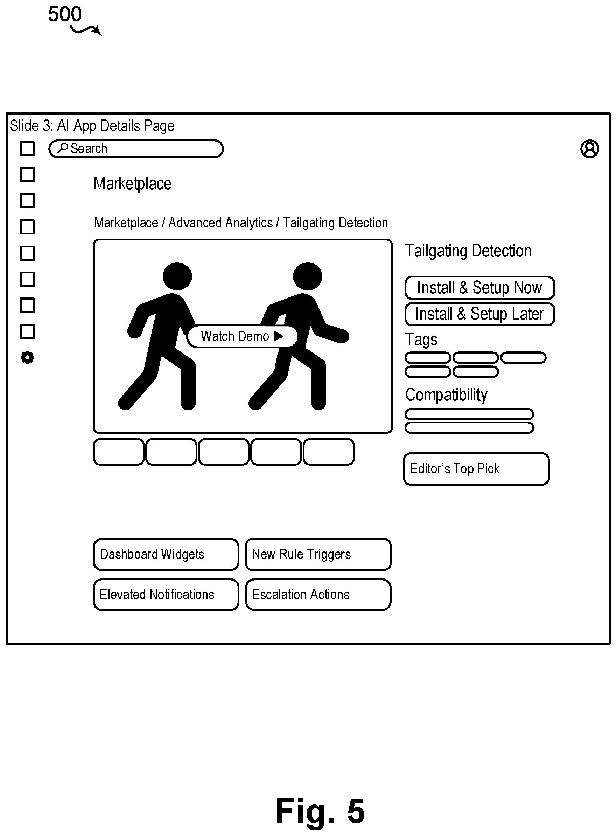

Referring to Fig. 5, one example of an AI App Details Page 500 includes comprehensive information about each AI solution available in the marketplace. This page is designed to inform users about the capabilities, requirements, and benefits of a selected AI model, supporting informed decision-making and reducing uncertainty during the selection process.

The screenshot in Fig. 5 illustrates an example of one implementation of a Tailgating Detection App Detail Page. This page includes a preview video that demonstrates the AI model in action, a detailed description of the app's functionality, and an "Install" button for initiating deployment. Additional information is provided regarding supported camera types, required compute resources (such as edge or cloud processing), and a summary of the deployment process. In some aspects, the layout may also include details about features included in the app, such as dashboard widgets, elevated notifications, new rule triggers, and escalation actions. The layout is structured to highlight the most relevant or important information at the top, with expandable sections or tabs for more granular details. Visual elements, such as screenshots or demo videos, may be prominently featured to give users a clear understanding of the app's real-world performance. The inclusion of hardware compatibility and deployment summaries ensures that users can quickly assess whether the AI model is suitable for their existing infrastructure.

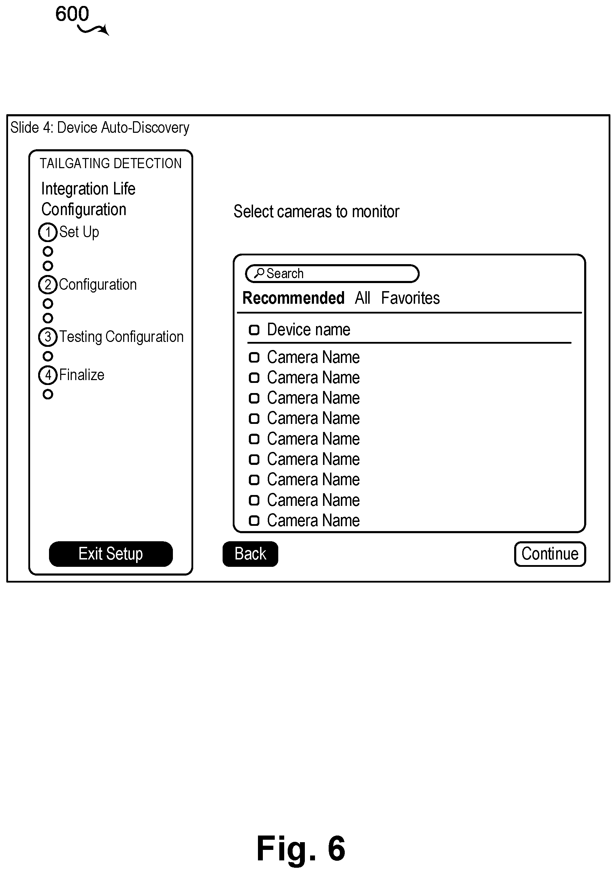

Referring to Fig. 6, an example of a device auto-discovery feature of the security management system AI Marketplace is provided, which automates the identification of relevant devices for AI model deployment. This functionality reduces manual configuration effort and ensures that AI applications are mapped to the most appropriate cameras or access points within the user's environment.

The screenshot in Fig. 6 includes an example of one implementation of an Install Wizard 600 where the system presents a list of available cameras for inclusion in the metrics of the tailgating app, each accompanied by a checkbox for selection. This part of the app configuration may be a portion of Step 2 (Configuration) of the process, following Step 1 (Setup), which performs the above-noted device compatibility check and a network configuration. For the camera selection, the install wizard 600 may include an auto-discovery process, which leverages device metadata, such as location, type, and angle of view, to suggest the most suitable devices for the chosen AI application. The user interface is designed to be straightforward, allowing users to accept the system's recommendations or manually adjust the selection as needed. This step in the workflow ensures that AI models are deployed to devices that can deliver optimal performance, while also providing flexibility for user customization. The device auto-discovery may enable the minimization of deployment errors and the acceleration of the setup process.

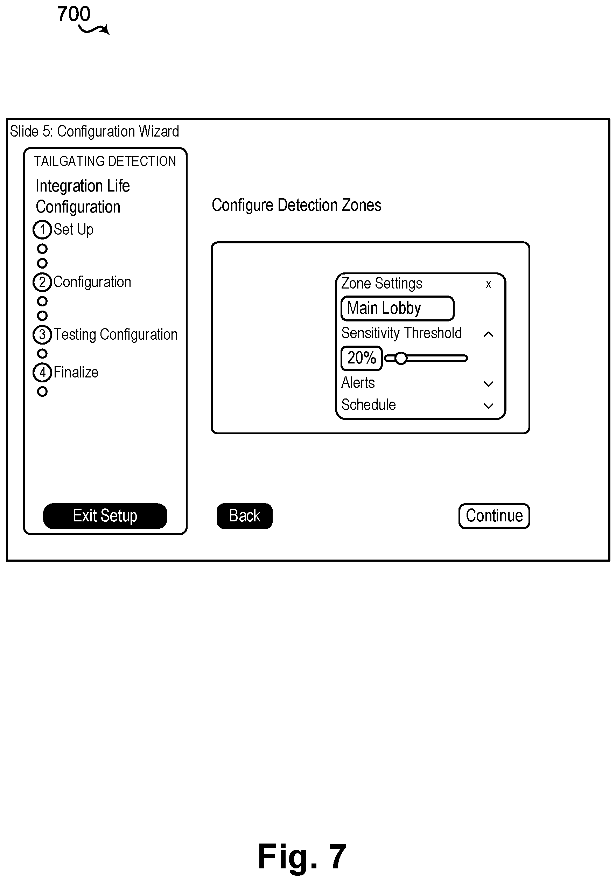

Referring to Fig. 7, an example of a Configuration Wizard 700 for setting up detection zonesguides users through the setup of AI applications in a step-by-step manner. The configuration wizard simplifies the process of defining detection parameters, alert preferences, and operational schedules, making advanced AI functionality accessible to users without specialized expertise.

The screenshot in Fig. 7 depicts an example of a continuation of the Step 2 (Configuration) of the wizard, where users are prompted to select detection zones by overlaying configurable areas on a live camera feed. The interface provides visual tools for drawing or adjusting detection zones, as well as options for setting sensitivity thresholds and scheduling detection intervals. And, the interface may enable alert preferences to be specified to determine how and when notifications are generated in response to detected events. In an aspect, the wizard's design emphasizes clarity and guidance, with contextual help and recommended defaults provided at each step. This approach ensures that users can confidently configure AI models to meet their operational needs, while reducing the risk of misconfiguration.

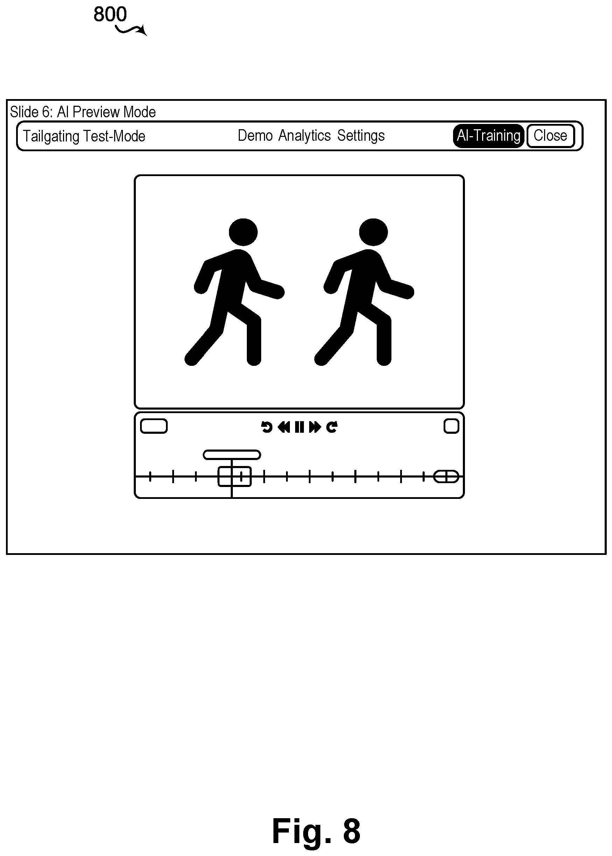

Referring to Fig. 8, an example of an AI Preview Mode 800 allows users to test AI model performance in real time before final deployment. This feature provides immediate feedback on the accuracy and effectiveness of the AI application, enabling users to validate configuration choices and make adjustments as needed.

The screenshot in Fig. 8 includes an example of one implementation of a tailgating test mode including a camera feed with AI-generated bounding boxes and classification tags, such as "Tailgate," overlaid on detected objects. The preview mode displays example detections, allowing users to observe how the AI model interprets the scene and responds to various scenarios. This interactive feedback loop supports iterative refinement of detection parameters and ensures that the AI application is functioning as intended prior to going live. In an aspect, the AI Preview Mode enables the reduction of false positives and the enhancement of user confidence in the deployed solution.

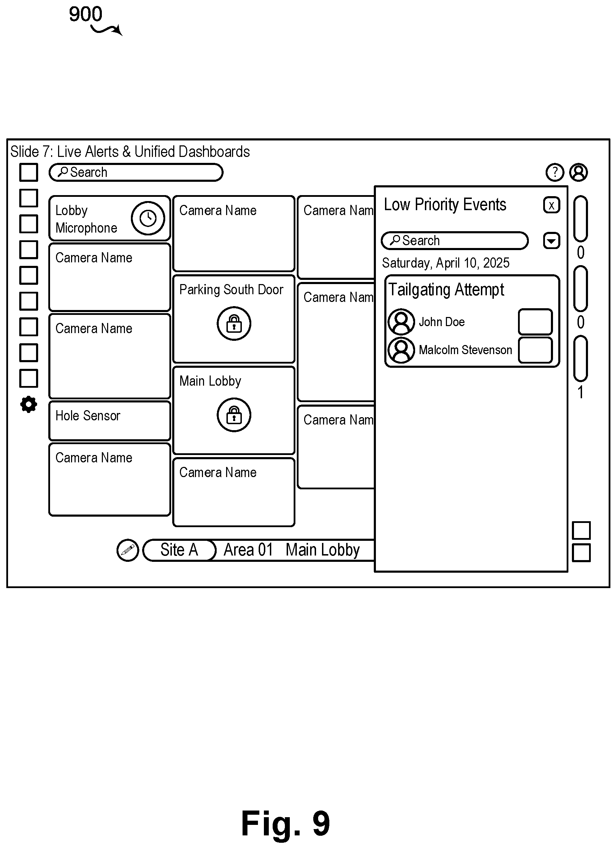

Referring to Fig. 9, an example of an integration of live alerts and unified dashboards within the security management system platform is provided. This functionality ensures that AI-generated events are seamlessly incorporated into the broader security monitoring and response workflows, providing a consolidated view of all security-related activity.

The screenshot in Fig. 9 includes an example of one implementation of an alert console 900 where AI-tagged events, such as "Tailgating Attempt: Edge Door 2," are listed alongside other system features, including live camera feeds, access door lock states, microphone states, and other notifications. The interface supports search and filter capabilities, enabling users to quickly locate and respond to critical events. Alerts can be routed to appropriate personnel via mobile push notifications, email, or other channels, based on user roles and preferences. The unified dashboard aggregates data from multiple AI applications, presenting real-time analytics and trend summaries in a single, cohesive view. This integration enhances situational awareness and streamlines incident response, thereby reducing response times and improving overall security posture.

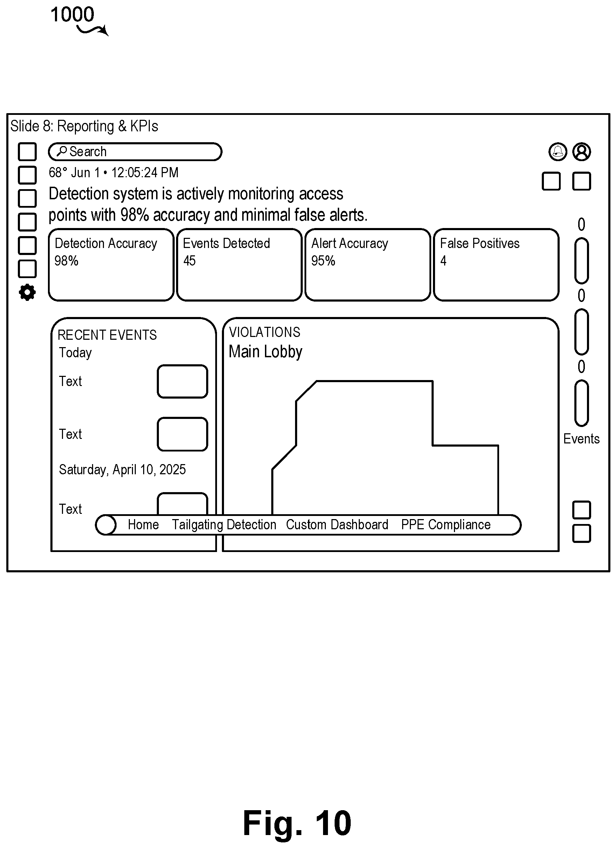

Referring to Fig. 10, one example of a reporting and KPI (Key Performance Indicator) capabilities page provided by the security management system AI Marketplace enables users to generate actionable insights from AI-driven analytics, supporting compliance, optimization, and continuous improvement initiatives.

The screenshot in Fig. 10 includes an example of one implementation of an access point monitoring dashboard 1000 that visualizes accuracy information and a heat map of tailgating violations across monitored zones. For example, the accuracy information includes metrics and/or graphs relating to tailgating detection accuracy, number of events detected over time, alert accuracy, and false positives. The dashboard may also include one or more recent access control events at one or more monitored locations. Further, users can generate reports in various formats to document compliance status, track performance over time, and identify areas for improvement. The dashboard provides both real-time and historical data, allowing users to analyze patterns, measure the impact of AI applications, and demonstrate regulatory adherence. The integrated reporting and key performance indicator (KPI) tracking helps to provide the ability to translate AI-generated data into meaningful business outcomes, supporting data-driven decision-making and operational excellence.

Collectively, Figs. 3-10 and their associated workflows demonstrate how the security management system AI Marketplace delivers a comprehensive, user-centric solution for deploying, configuring, and managing AI-driven security analytics. The design and functionality of each interface element are optimized to reduce complexity, enhance usability, and maximize the value of AI applications within the security management ecosystem.

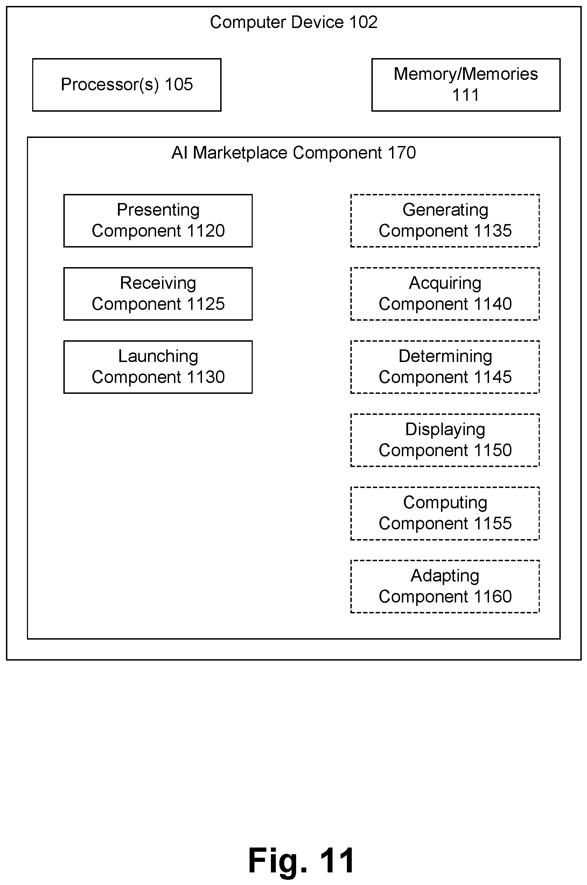

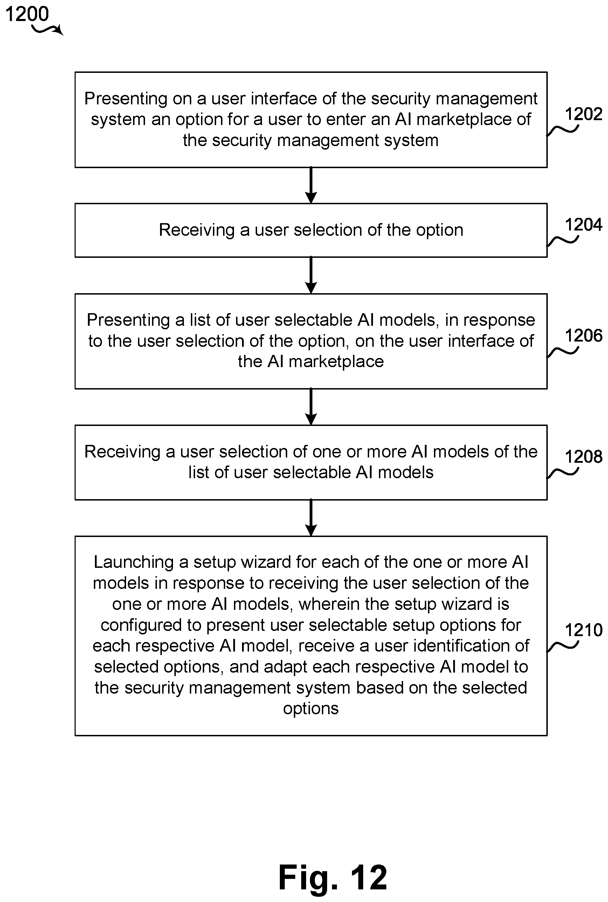

Referring to Fig. 11 and Fig. 12, in operation, security management system 100 may perform a method 1200 for adding user selectable artificial intelligence (AI) functionality to a security management system, such as via execution of AI marketplace component 170 by one or more processors of a computer device 102. The one or more processors 105 may be configured, individually or in any combination, to execute instructions to perform the following actions, and/or configured to communicate with one or more memories 111 to obtain the instructions and execute the actions.

At block 1202, the method 1200 includes presenting on a user interface of the security management system an option for a user to enter an AI marketplace of the security management system. For example, in an aspect, computer device 100, one or more processors 105, one or more memories 111, AI marketplace component 170, and/or presenting component 1120 may be configured to or may comprise means for presenting on a user interface of the security management system an option for a user to enter an AI marketplace of the security management system. The presenting at block 1202 may include displaying a clearly labeled entry point, such as a button or menu item, within the main dashboard or navigation pane of the security management system's user interface, allowing users to access the AI marketplace directly from the platform's homepage. In one example implementation, this is achieved by integrating the marketplace access into the unified management console, as shown in Fig. 3, where the marketplace homepage is accessible from the main catalog view. This aspect may provide a seamless and intuitive user experience, reducing the steps required to discover and deploy AI solutions, as exemplified in Fig. 3, which emphasizes ease of access and navigation.

At block 1204, the method 1200 includes receiving a user selection of the option. For example, in an aspect, computer device 100, one or more processors 105, one or more memories 111, AI marketplace component 170, and/or receiving component 1125 may be configured to or may comprise means for receiving a user selection of the option. The receiving at block 1204 may include detecting a user's click or tap on the marketplace entry point within the user interface, which triggers the system to load the AI marketplace module. This is typically accomplished through standard UI event handling mechanisms, as illustrated in Figs. 3-5, where user interaction with the marketplace entry initiates the marketplace workflow. This approach helps to ensure immediate and responsive access to the marketplace, minimizing user effort and supporting a frictionless workflow, as highlighted in the user-centric design of Figs. 3-5.

At block 1206, the method 1200 includes presenting a list of user selectable AI models, in response to the user selection of the option, on the user interface of the AI marketplace. For example, in an aspect, computer device 100, one or more processors 105, one or more memories 111, AI marketplace component 170, and/or presenting component 1125 may be configured to or may comprise means for presenting a list of user selectable AI models, in response to the user selection of the option, on the user interface of the AI marketplace. The presenting at block 1206 may include dynamically generating and displaying a catalog of available AI models, organized by categories such as industry vertical, use case, or provider, with filtering and search capabilities. This is achieved by querying the marketplace's backend for available models and rendering them as interactive cards or list items, as shown in Fig. 3 and Fig. 4, where users can browse and filter AI solutions. This design enables efficient discovery and comparison of AI models, supporting targeted exploration and informed decision-making, as demonstrated in the filterable catalog and use case discovery features of Fig. 3 and Fig. 4.

At block 1208, the method 1200 includes receiving a user selection of one or more AI models of the list of user selectable AI models. For example, in an aspect, computer device 100, one or more processors 105, one or more memories 111, AI marketplace component 170, and/or receiving component 1125 may be configured to or may comprise means for receiving a user selection of one or more AI models of the list of user selectable AI models. The receiving at block 1208 may include capturing the user's interaction with the "Install" button or equivalent selection mechanism on the AI app details page, as depicted in Fig. 5, where users can review detailed information and initiate installation. This approach allows users to make informed choices based on comprehensive app descriptions and compatibility information, as shown in Fig. 5, supporting a transparent and user-driven selection process.

At block 1210, the method 1200 includes launching a setup wizard for each of the one or more AI models in response to receiving the user selection of the one or more AI models, wherein the setup wizard is configured to present user selectable setup options for each respective AI model, receive a user identification of selected options, and adapt each respective AI model to the security management system based on the selected options. For example, in an aspect, computer device 100, one or more processors 105, one or more memories 111, AI marketplace component 170, and/or launching component 1130 may be configured to or may comprise means for launching a setup wizard for each of the one or more AI models in response to receiving the user selection of the one or more AI models, wherein the setup wizard is configured to present user selectable setup options for each respective AI model, receive a user identification of selected options, and adapt each respective AI model to the security management system based on the selected options. The launching at block 1210 may include initiating a guided, step-by-step configuration process that walks the user through device selection, parameter setting, detection zone definition, and alert preferences, as illustrated in Fig. 6 and Fig. 7. The wizard leverages device auto-discovery to suggest compatible hardware and provides visual tools for configuration, as shown in Fig. 6 and Fig. 7. This approach may simplify deployment, reduce configuration errors, and make advanced AI functionality accessible to users without specialized expertise, as demonstrated by the intuitive and guided setup experience in Fig. 6 and Fig. 7.

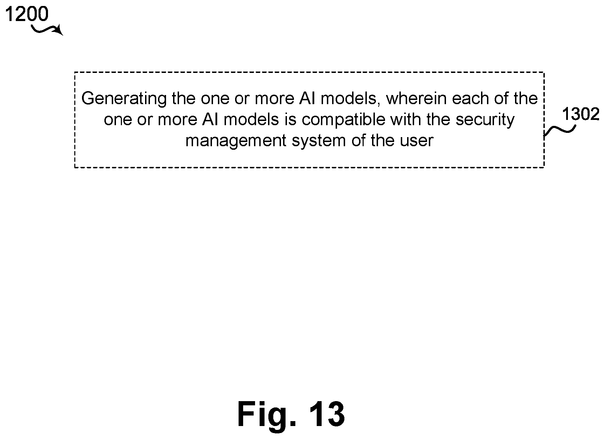

Referring to Fig. 13, in an alternative or additional aspect, at block 1302, the method 1200 may further include generating or deploying the one or more AI models, wherein each of the one or more AI models is compatible with the security management system of the user. For example, in an aspect, computer device 100, one or more processors 105, one or more memories 111, AI marketplace component 170, and/or generating component 1135 may be configured to or may comprise means for generating or deploying the one or more AI models, wherein each of the one or more AI models is compatible with the security management system of the user. The generating at block 1302 may include developing or packaging AI models using a standardized framework or SDK that ensures compatibility with the security management system platform, as described in the marketplace's support for both first-party and third-party models (see Fig. 3 and Fig. 5). This approach may enable seamless integration and deployment of AI models across diverse environments, maximizing flexibility and extensibility, as supported by the open architecture described in Fig. 3 and Fig. 5.

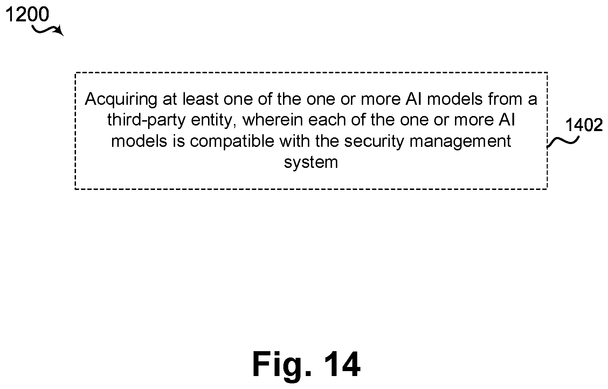

Referring to Fig. 14, in an alternative or additional aspect, at block 1402, the method 1200 may further include acquiring at least one of the one or more AI models from a third-party entity, wherein each of the one or more AI models is compatible with the security management system. For example, in an aspect, computer device 100, one or more processors 105, one or more memories 111, AI marketplace component 170, and/or acquiring component 1140 may be configured to or may comprise means for acquiring at least one of the one or more AI models from a third-party entity, wherein each of the one or more AI models is compatible with the security management system. The acquiring at block 1402 may include importing or onboarding AI models from external developers through a defined submission and validation process, ensuring that each model meets compatibility and security requirements, as referenced in the marketplace's extensibility for partner solutions (see Fig. 3 and Fig. 5). This approach may expand the range of available AI solutions and foster innovation, while maintaining system integrity and user trust, as highlighted in the marketplace's support for third-party contributions in Fig. 3 and Fig. 5.

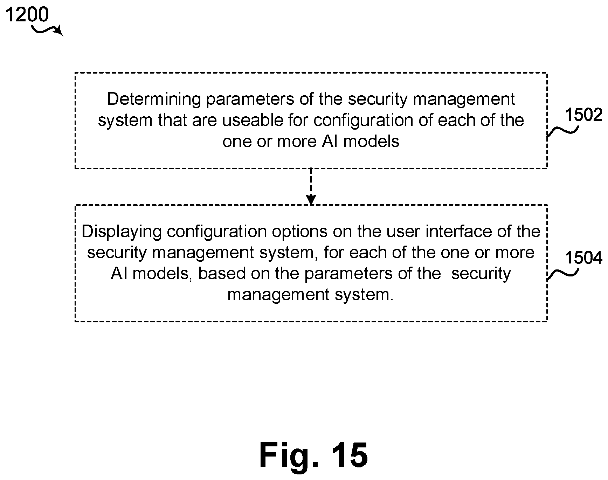

Referring to Fig. 15, in an alternative or additional aspect, at block 1502, the method 1200 may further include determining parameters of the security management system that are useable for configuration of each of the one or more AI models. For example, in an aspect, computer device 100, one or more processors 105, one or more memories 111, AI marketplace component 170, and/or determining component 1145 may be configured to or may comprise means for determining parameters of the security management system that are useable for configuration of each of the one or more AI models. The determining at block 1502 may include automatically analyzing the system's device inventory, network topology, and available compute resources to identify which cameras, access points, or other devices are suitable for the selected AI model, as demonstrated in the device auto-discovery step in Fig. 6. This approach may streamline configuration, reduce manual effort, and ensure optimal deployment of AI models, as shown in the automated device mapping and recommendation features of Fig. 6.

In this optional aspect, at block 1504, the method 1200 may further include displaying configuration options on the user interface of the security management system, for each of the one or more AI models, based on the parameters of the security management system. For example, in an aspect, computer device 100, one or more processors 105, one or more memories 111, AI marketplace component 170, and/or displaying component 1150 may be configured to or may comprise means for displaying configuration options on the user interface of the security management system, for each of the one or more AI models, based on the parameters of the security management system. The displaying at block 1504 may include presenting context-sensitive setup options, such as recommended device selections, detection thresholds, and alert settings, tailored to the user's environment, as shown in the configuration wizard in Fig. 7. This approach may provide a personalized and efficient setup experience, reducing the risk of misconfiguration and supporting best practices, as illustrated in the guided configuration steps of Fig. 7.

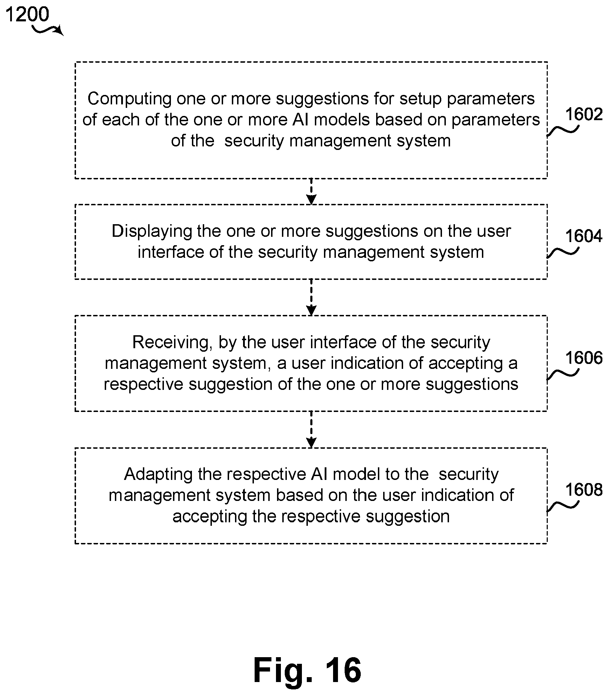

Referring to Fig. 16, in an alternative or additional aspect, at block 1602, the method 1200 may further include computing one or more suggestions for setup parameters of each of the one or more AI models based on parameters of the security management system. For example, in an aspect, computer device 100, one or more processors 105, one or more memories 111, AI marketplace component 170, and/or computing component 1155 may be configured to or may comprise means for computing one or more suggestions for setup parameters of each of the one or more AI models based on parameters of the security management system. The computing at block 1602 may include analyzing device capabilities, historical data, and typical use case requirements to generate recommended configuration values, such as detection zones or alert thresholds, as demonstrated in the wizard's provision of recommended defaults in Fig. 7. This approach may accelerate deployment and improve accuracy, leveraging system intelligence to assist users, as shown in the context-aware recommendations in Fig. 7.

In this optional aspect, at block 1604, the method 1200 may further include displaying the one or more suggestions on the user interface of the security management system. For example, in an aspect, computer device 100, one or more processors 105, one or more memories 111, AI marketplace component 170, and/or displaying component 1150 may be configured to or may comprise means for displaying the one or more suggestions on the user interface of the security management system. The displaying at block 1604 may include visually presenting suggested values or selections within the setup wizard, allowing users to review and accept or modify them, as shown in the configuration steps of Fig. 7. This approach may enhance user confidence and reduce setup time, providing clear guidance and minimizing guesswork, as illustrated in the wizard's user-friendly interface in Fig. 7.

In this optional aspect, at block 1606, the method 1200 may further include receiving, by the user interface of the security management system, a user indication of accepting a respective suggestion of the one or more suggestions. For example, in an aspect, computer device 100, one or more processors 105, one or more memories 111, AI marketplace component 170, and/or receiving component 1125 may be configured to or may comprise means for receiving, by the user interface of the security management system, a user indication of accepting a respective suggestion of the one or more suggestions. The receiving at block 1606 may include capturing the user's confirmation or adjustment of suggested parameters via interactive controls in the setup wizard, as depicted in Fig. 7. This approach may ensure that the final configuration reflects user intent and operational requirements, supporting both automation and customization, as shown in the flexible setup process in Fig. 7.

In this optional aspect, at block 1608, the method 1200 may further include adapting the respective AI model to the security management system based on the user indication of accepting the respective suggestion. For example, in an aspect, computer device 100, one or more processors 105, one or more memories 111, AI marketplace component 170, and/or adapting component 1160 may be configured to or may comprise means for adapting the respective AI model to the security management system based on the user indication of accepting the respective suggestion. The adapting at block 1608 may include applying the selected configuration to the AI model and deploying it to the designated devices, updating system settings and alerting mechanisms as needed, as shown in the deployment and preview steps in Fig. 8. This approach may operationalize the AI model with minimal delay, ensuring that it functions according to user-defined parameters, as demonstrated in the real-time preview and deployment workflow in Fig. 8.

In an alternative or additional aspect, the one or more suggestions include one or more suggested cameras that are usable by the respective AI model. In an alternative or additional aspect, the one or more suggestions include one or more recommended component thresholds of the security management system, based on the respective AI model.

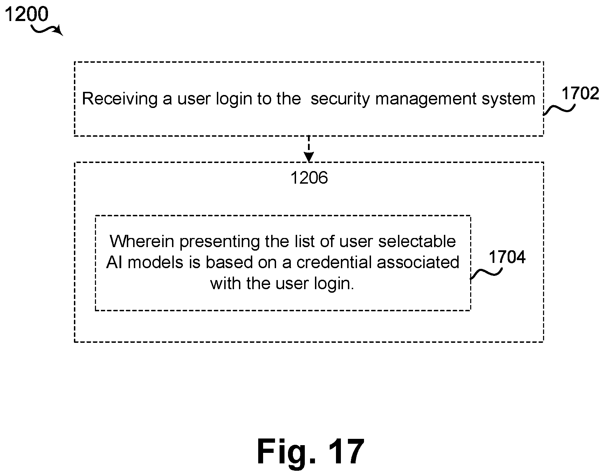

Referring to Fig. 17, in an alternative or additional aspect, at block 1702, the method 1200 may further include receiving a user login to the security management system. For example, in an aspect, computer device 100, one or more processors 105, one or more memories 111, AI marketplace component 170, and/or receiving component 1125 may be configured to or may comprise means for receiving a user login to the security management system. The receiving at block 1702 may include authenticating the user via standard login procedures, such as username and password or single sign-on, to establish user identity and access rights, for example. This approach may ensure secure and authorized access to the AI marketplace and configuration features, protecting sensitive operations and data.

In this optional aspect, at block 1704, the presenting at block 1206 of the list of user selectable AI models is based on a credential associated with the user login. For example, this may include filtering available AI models according to the user's role, permissions, or organizational context, ensuring that only authorized or relevant solutions are displayed, as shown in the personalized experience described in Fig. 3 and Fig. 4. This approach may enhance security and relevance, tailoring the marketplace experience to each user's responsibilities and needs, as demonstrated in the user-specific filtering and access described in Fig. 3 and Fig. 4.

In an alternative or additional aspect, the security management system comprises a cloud-based security management system.

In an alternative or additional aspect, the list of user selectable AI models include one or more of: a protective equipment compliance detection model, a tail-gating detection model, an automated camera inspection model, an intrusion detection module, or a people counting module.

### SOME ADDITIONAL EXAMPLES

The aspects described herein additionally include one or more of the following aspect examples described in the following numbered clauses.

Clause 1. An apparatus for adding user selectable artificial intelligence (AI) functionality to a security management system, comprising: one or more memories; and one or more processors coupled with one or more memories and configured, , individually or in combination, to: present on a user interface of the security management system an option for a user to enter an AI marketplace of the security management system; receive a user selection of the option; present a list of user selectable AI models, in response to the user selection of the option, on the user interface of the AI marketplace; receive a user selection of one or more AI models of the list of user selectable AI models; and launch a setup wizard for each of the one or more AI models in response to receive the user selection of the one or more AI models, wherein the setup wizard is configured to present user selectable setup options for each respective AI model, receive a user identification of selected options, and adapt each respective AI model to the security management system based on the selected options.

Clause 2. The apparatus of clause 1, wherein the one or more processors are further configured to: generate or deploy the one or more AI models, wherein each of the one or more AI models is compatible with the security management system of the user.

Clause 3. The apparatus of clause 1, wherein the one or more processors are further configured to: acquire at least one of the one or more AI models from a third-party entity, wherein each of the one or more AI models is compatible with the security management system.

Clause 4. The apparatus of clause 1, comprising: determine parameters of the security management system that are useable for configuration of each of the one or more AI models; and display configuration options on the user interface of the security management system, for each of the one or more AI models, based on the parameters of the security management system.

Clause 5. The apparatus of clause 1, comprising: compute one or more suggestions for setup parameters of each of the one or more AI models based on parameters of the security management system; and display the one or more suggestions on the user interface of the security management system.

Clause 6. The apparatus of clause 5, comprising: receive, by the user interface of the security management system, a user indication of accepting a respective suggestion of the one or more suggestions; and adapt the respective AI model to the security management system based on the user indication of accepting the respective suggestion.

Clause 7. The apparatus of clause 5, wherein the one or more suggestions include one or more suggested cameras that are usable by the respective AI model.

Clause 8. The apparatus of clause 5, wherein the one or more suggestions include one or more recommended component thresholds of the security management system, based on the respective AI model.

Clause 9. The apparatus of clause 1, wherein the one or more processors are further configured to: receive a user login to the security management system; and wherein to present the list of user selectable AI models is based on a credential associated with the user login.

Clause 10. The apparatus of clause 1, wherein the security management system comprises a cloud-based security management system.

Clause 11. The apparatus of clause 1, wherein the list of user selectable AI models include one or more of: a protective equipment compliance detection model; a tail-gating detection model; an automated camera inspection model; an intrusion detection module; or a people counting module.

Clause 12. A method for adding user selectable artificial intelligence (AI) functionality to a security management system, comprising: presenting on a user interface of the security management system an option for a user to enter an AI marketplace of the security management system; receiving a user selection of the option; presenting a list of user selectable AI models, in response to the user selection of the option, on the user interface of the AI marketplace; receiving a user selection of one or more AI models of the list of user selectable AI models; and launching a setup wizard for each of the one or more AI models in response to receiving the user selection of the one or more AI models, wherein the setup wizard is configured to present user selectable setup options for each respective AI model, receive a user identification of selected options, and adapt each respective AI model to the security management system based on the selected options.

Clause 13. The method of clause 12, further comprising: generating or deploying the one or more AI models, wherein each of the one or more AI models is compatible with the security management system of the user.

Clause 14. The method of clause 12, further comprising: acquiring at least one of the one or more AI models from a third-party entity, wherein each of the one or more AI models is compatible with the security management system.

Clause 15. The method of clause 12, comprising: determining parameters of the security management system that are useable for configuration of each of the one or more AI models; and displaying configuration options on the user interface of the security management system, for each of the one or more AI models, based on the parameters of the security management system.

Clause 16. The method of clause 12, comprising: computing one or more suggestions for setup parameters of each of the one or more AI models based on parameters of the security management system; and displaying the one or more suggestions on the user interface of the security management system.

Clause 17. The method of clause 16, comprising: receiving, by the user interface of the security management system, a user indication of accepting a respective suggestion of the one or more suggestions; and adapting the respective AI model to the security management system based on the user indication of accepting the respective suggestion.

Clause 18. The method of clause 16, wherein the one or more suggestions include one or more suggested cameras that are usable by the respective AI model.

Clause 19. The method of clause 16, wherein the one or more suggestions include one or more recommended component thresholds of the security management system, based on the respective AI model.

Clause 20. The method of clause 12, further comprising: receiving a user login to the security management system; and wherein presenting the list of user selectable AI models is based on a credential associated with the user login.

Clause 21. The method of clause 12, wherein the security management system comprises a cloud-based security management system.

Clause 22. The method of clause 12, wherein the list of user selectable AI models include one or more of: a protective equipment compliance detection model; a tail-gating detection model; an automated camera inspection model; an intrusion detection module; or a people counting module.

The above detailed description set forth above in connection with the appended drawings describes examples and does not represent the only examples that may be implemented or that are within the scope of the claims. The term "example," when used in this description, means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, computer-executable code or instructions stored on a computer-readable medium, or any combination thereof.

The various illustrative blocks and components described in connection with the disclosure herein may be implemented or performed with a specially-programmed device, such as but not limited to a processor, a digital signal processor (DSP), an ASIC, a FPGA or other programmable logic device, a discrete gate or transistor logic, a discrete hardware component, or any combination thereof designed to perform the functions described herein. A specially-programmed processor may be a microprocessor, but in the alternative, the processor may be any conventional processor, controller, microcontroller, or state machine. A specially-programmed processor may also be implemented as a combination of computing devices, e.g., a combination of a DSP and a microprocessor, multiple microprocessors, one or more microprocessors in conjunction with a DSP core, or any other such configuration.

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

The functions described herein may be implemented in hardware, software, or any combination thereof. If implemented in software executed by a processor, the functions may be stored on or transmitted over as one or more instructions or code on a non-transitory computer-readable medium. Other examples and implementations are within the scope of the disclosure and appended claims. For example, due to the nature of software, functions described above can be implemented using software executed by a specially programmed processor, hardware, hardwiring, or combinations of any of these. Features implementing functions may also be physically located at various positions, including being distributed such that portions of functions are implemented at different physical locations. Moreover, the term "or" is intended to mean an inclusive "or" rather than an exclusive "or." That is, unless specified otherwise, or clear from the context, the phrase, for example, "X employs A or B" is intended to mean any of the natural inclusive permutations. That is, for example the phrase "X employs A or B" is satisfied by any of the following instances: X employs A; X employs B; or X employs both A and B. Also, as used herein, including in the claims, "or" as used in a list of items prefaced by "at least one of" indicates a disjunctive list such that, for example, a list of "at least one of A, B, or C" means A or B or C or AB or AC or BC or ABC (A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

The previous description of the disclosure is provided to enable a person skilled in the art to make or use the disclosure. Various modifications to the disclosure will be readily apparent to those skilled in the art, and the common principles defined herein may be applied to other variations without departing from the scope of the disclosure. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise. Thus, the disclosure is not to be limited to the examples and designs described herein but is to be accorded the widest scope consistent with the principles and novel features disclosed herein.

## Claims

1. An apparatus for adding user selectable artificial intelligence, AI, functionality to a security management system, comprising:
one or more memories; and
one or more processors coupled with one or more memories and configured, , individually or in combination, to:
present on a user interface of the security management system an option for a user to enter an AI marketplace of the security management system;
receive a user selection of the option;
present a list of user selectable AI models, in response to the user selection of the option, on the user interface of the AI marketplace;
receive a user selection of one or more AI models of the list of user selectable AI models; and
launch a setup wizard for each of the one or more AI models in response to receive the user selection of the one or more AI models, wherein the setup wizard is configured to present user selectable setup options for each respective AI model, receive a user identification of selected options, and adapt each respective AI model to the security management system based on the selected options.

2. The apparatus of claim 1, wherein the one or more processors are further configured to:
generate or deploy the one or more AI models, wherein each of the one or more AI models is compatible with the security management system of the user.

3. The apparatus of claim 1 or 2, wherein the one or more processors are further configured to:
acquire at least one of the one or more AI models from a third-party entity, wherein each of the one or more AI models is compatible with the security management system.

4. The apparatus of any one of the preceding claims, wherein the one or more processors are further configured to:
determine parameters of the security management system that are useable for configuration of each of the one or more AI models; and
display configuration options on the user interface of the security management system, for each of the one or more AI models, based on the parameters of the security management system.

5. The apparatus of any one of the preceding claims, wherein the one or more processors are further configured to:
compute one or more suggestions for setup parameters of each of the one or more AI models based on parameters of the security management system; and
display the one or more suggestions on the user interface of the security management system.

6. The apparatus of claim 5, wherein the one or more processors are further configured to:
receive, by the user interface of the security management system, a user indication of accepting a respective suggestion of the one or more suggestions; and
adapt the respective AI model to the security management system based on the user indication of accepting the respective suggestion.

7. The apparatus of claim 5 or 6, wherein the one or more suggestions include:
one or more suggested cameras that are usable by the respective AI model, and/or
one or more recommended component thresholds of the security management system, based on the respective AI model.

8. The apparatus of any one of the preceding claims, wherein the one or more processors are further configured to:
receive a user login to the security management system; and
present the list of user selectable AI models based on a credential associated with the user login.

9. The apparatus of any one of the preceding claims, wherein the security management system comprises a cloud-based security management system, and/or
wherein the list of user selectable AI models includes one or more of:
a protective equipment compliance detection model;
a tail-gating detection model;
an automated camera inspection model;
an intrusion detection module; or
a people counting module.

10. A method for adding user selectable artificial intelligence, AI, functionality to a security management system, comprising:
presenting on a user interface of the security management system an option for a user to enter an AI marketplace of the security management system;
receiving a user selection of the option;
presenting a list of user selectable AI models, in response to the user selection of the option, on the user interface of the AI marketplace;
receiving a user selection of one or more AI models of the list of user selectable AI models; and
launching a setup wizard for each of the one or more AI models in response to receiving the user selection of the one or more AI models, wherein the setup wizard is configured to present user selectable setup options for each respective AI model, receive a user identification of selected options, and adapt each respective AI model to the security management system based on the selected options.

11. The method of claim 10, further comprising:
generating or deploying the one or more AI models, wherein each of the one or more AI models is compatible with the security management system of the user.

12. The method of claim 10 or 11, further comprising:
acquiring at least one of the one or more AI models from a third-party entity, wherein each of the one or more AI models is compatible with the security management system, and/or
determining parameters of the security management system that are useable for configuration of each of the one or more AI models; and
displaying configuration options on the user interface of the security management system, for each of the one or more AI models, based on the parameters of the security management system.

13. The method of any one of claims 10 to 12, comprising:
computing one or more suggestions for setup parameters of each of the one or more AI models based on parameters of the security management system; and
displaying the one or more suggestions on the user interface of the security management system,
optionally further comprising:
receiving, by the user interface of the security management system, a user indication of accepting a respective suggestion of the one or more suggestions, wherein the one or more suggestions include at least one of one or more suggested cameras that are usable by the respective AI model and one or more recommended component thresholds of the security management system, based on the respective AI model; and
adapting the respective AI model to the security management system based on the user indication of accepting the respective suggestion.

14. The method of any one of claims 10 to 13, further comprising:
receiving a user login to the security management system,
wherein presenting the list of user selectable AI models is based on a credential associated with the user login.

15. The method of any one of claims 10 to 14, wherein the security management system comprises a cloud-based security management system, and/or
wherein the list of user selectable AI models includes one or more of:
a protective equipment compliance detection model;
a tail-gating detection model;
an automated camera inspection model;
an intrusion detection module; or
a people counting module.
